# EUROPEAN PATENT APPLICATION

(11) **EP 0 740 216 A2**
(43) Date of publication of application: **30.10.1996**
(21) Application number: 96302787.5
(22) Date of filing: 19.04.1996
(51) Int. Cl.: G03G 5/07, G03G 5/05, C08F 120/34

(54) **Polymer, electrophotographic photosensitive member and electroluminescence device using the polymer, process cartridge and electrophotographic apparatus using the electrophotographic photosensitive member**

(30) Priority: 24.04.1995 JP 98499/95
(71) Applicant: CANON KABUSHIKI KAISHA, Tokyo (JP)
(72) Inventor: Senoo, Akihiro, Ohta-ku, Tokyo (JP); Kikuchi, Toshihiro, Ohta-ku, Tokyo (JP); Kashizaki, Yoshio, Ohta-ku, Tokyo (JP); Sekido, Kunihiko, Ohta-ku, Tokyo (JP)
(74) Representative: Beresford, Keith Denis Lewis

(57) **Abstract**

A polymer characterised by containing the following structural unit (1) 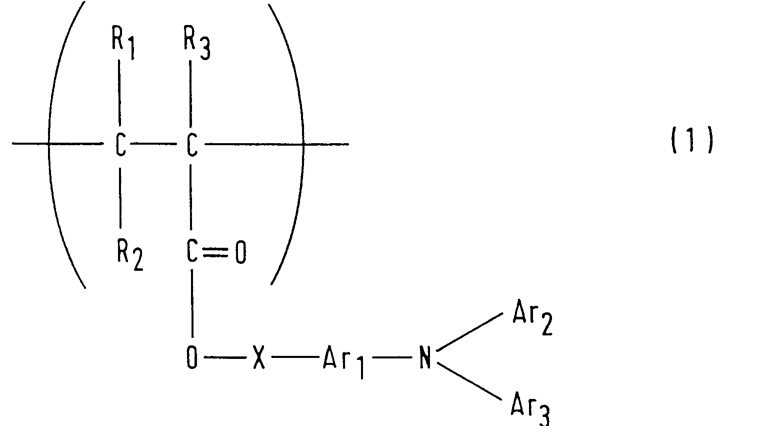
wherein each of R₁, R₂, and R₃ is a hydrogen atom, an alkyl group or a halogen atom. R₁, R₂, and R₃ may be the same or different. X is an alkylene group. Ar₁ is a phenylene group. Each of Ar₂ and Ar₃ is an aromatic hydrocarbon ring group or an aromatic heterocyclic group. Ar₂ and Ar₃ may be the same or different. Each of R₁, R₂, R₃, X, Ar₁, Ar₂ and Ar₃ may have substituents. The above polymer has excellent hole transfer characteristics, layer forming characteristics and high mechanical strength.

## Description

### Background of the Invention

### Field of the Invention

The present invention relates to a polymer, particularly to a polymer which has excellent hole transfer characteristics. It also relates to an electrophotographic photosensitive member and an electroluminescence device using the polymer, and to a process cartridge and an electrophotographic apparatus using the electrophotographic photosensitive member.

### Description of the Prior Art

A material in which only one kind of carrier of electrons and holes can pass is useful for various devices. A hole transfer material in which only holes can pass is used as a photosensitive material of a photoelectrographic photosensitive member (hereinbelow referred to as "a photosensitive member"). Furthermore it can be used as an electroluminescence material.

Since a photosensitive member which uses an organic hole transfer material (hereinbelow referred to as "OPC photosensitive member") is superior in terms of productivity to an inorganic photosensitive member which uses an inorganic photosensitive material, many copying machines or printers having the OPC photosensitive member are used.

The OPC photosensitive member may comprise a support, a charge generating layer (CGL) and a charge transport layer (CTL). The CTL is usually made of a mixture of low molecular weight charge transporting material (CTM) and transparent polymer. Examples of the CTM may include a hole transfer material such as triarylamine derivatives, hydrazone derivatives and dialkylaminobenzene derivatives. Examples of the transparent polymer may include polycarbonate resin. If the content of CTM is too high, defective images can be formed due to separation of CTM crystals. On the other hand, if the content of CTM is too low, holes cannot be transferred in the CTL effectively. Furthermore, since mechanical strength of the CTL declines, defective images can be formed due to flaws or cracks of the OPC photosensitive member.

A polystyrene polymer having a hydrazone group is disclosed as a high molecular weight hole transfer material in Japanese Laid-open Patent Application Nos. 2-272005 and 3-180852. However, incorporation of the polymer is undesirable in terms of hole transfer speed and residual potential.

An electroluminescence phenomenon of an anthracene single crystal was discovered by Pope et al. in 1963. However, since it was impossible to make a thin single crystal, the electroluminescence of this single crystal needed a driving voltage as high as several hundred volts, therefore, the single crystal electroluminescence could not be put to practical use.

Tang et al. developed in 1987 an organic electroluminescent material which comprised a hole transfer layer having a thickness of 100nm and a luminescence layer. It was formed by vapour deposition, and achieved 2,000 Cd/m² at a voltage of 10V or below. The characteristics of the organic electroluminescent material are as follows. It can be driven by applying a low voltage. It is easy to produce light of various colours. Furthermore it is inexpensive.

A hole transfer material such as triarylamine derivatives and dialkylamine derivatives is used in the conventional organic electroluminescence. However the conventional hole transfer material is undesirable in terms of forming a layer and hole transfer efficiency.

### Summary of the Invention

An object of the present invention is to provide a polymer which has excellent hole transfer characteristics, layer forming characteristics and high mechanical strength.

Another object of the present invention is to provide a photosensitive member using the aforesaid polymer, and having excellent sensitivity, potential stability and mechanical strength.

Another object of the present invention is to provide a process cartridge and electrophotographic apparatus using the aforesaid photosensitive member, and having excellent luminosity, layer forming characteristics and durability.

Furthermore, another object of the present invention is to provide an electroluminescence device using the aforesaid polymer.

The present invention provides a polymer characterised by containing the following structural unit (1) 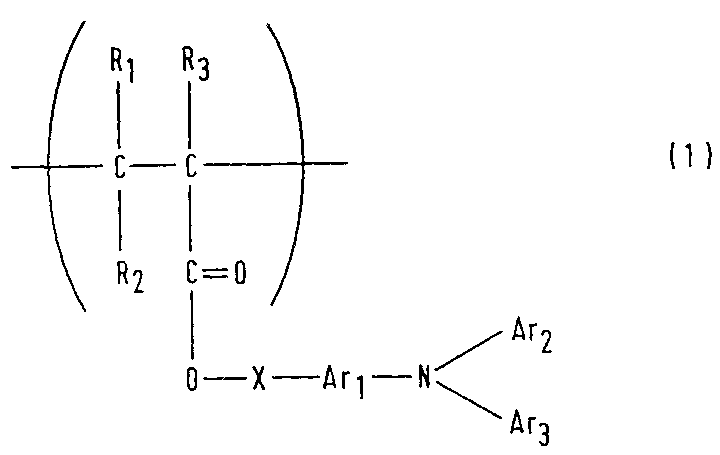 wherein each of R₁, R₂, and R₃ is a hydrogen atom, an alkyl group or a halogen atom. R₁, R₂, and R₃ may be the same or different. X is an alkylene group. Ar₁ is a phenylene group. Each of Ar₂ and Ar₃ is an aromatic hydrocarbon ring group or an aromatic heterocyclic group. Ar₂ and Ar₃ may be the same or different. Each of R₁, R₂, R₃, X, Ar₁, A₂ and Ar₃ may have substituents.

The invention also provides a photosensitive member having a photosensitive layer containing the above polymer, an electroluminescence device having a hole transfer layer containing the above polymer, a process cartridge and an electrophotographic apparatus having the above photosensitive member.

### Brief Description of the Drawings

How the invention may be put into effect will now be described, by way of example only, with reference to the accompanying drawings in which:
Figure 1 is an infrared absorption spectrum of the polymer of the present invention prepared in Example 1;
Figure 2 is an infrared absorption spectrum of the polymer of the present invention prepared in Example 2;
Figure 3 is a diagrammatic side view of one embodiment of an electrophotographic apparatus according to the invention; and
Figure 4 is a block diagram of a facsimile machine using the electrophotographic photosensitive member according to the invention.

### Detailed Description of the Invention

In the following description "part(s)" and "%" means "weight part(s)" and "weight %" respectively.

The polymer of the present invention contains the following structural unit (1) 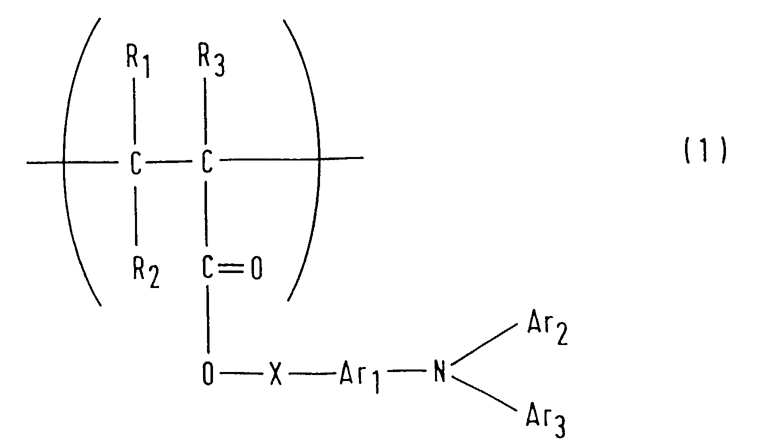 wherein each of R₁, R₂, and R₃ is a hydrogen atom, an alkyl group or a halogen atom. R₁, R₂, and R₃ may be the same or different. X is an alkylene group. A₁ is a phenylene group. Each of Ar₂ and Ar₃ is an aromatic hydrocarbon ring group or an aromatic heterocyclic group, and may be the same or different. Each of R₁, R₂, R₃, X, Ar₁, Ar₂ and Ar₃ may have substituents.

Examples of the alkyl group of R₁, R₂, and R₃ include methyl, ethyl and propyl. Examples of the halogen atom include fluorine, chlorine and bromine. Examples of the possible substituents of the alkyl group include a halogen atom such as fluorine, chlorine and bromine.

Examples of the alkylene group of X include methylene, ethylene and propylene. Examples of the possible substituents of X include a halogen atom such as fluorine, chlorine and bromine.

Examples of the possible substituents of Ar₁ include a halogen atom such as fluorine, chlorine and bromine, alkyl group such as methyl, ethyl and propyl, alkoxy group such as methoxy, ethoxy and propoxy.

Examples of the aromatic hydrocarbon ring group of Ar₂ and Ar₃ include phenyl, biphenyl, terphenyl, naphthyl, anthracenyl and pyrenyl. Examples of the aromatic heterocyclic group include pyridyl and thiophenyl.

Examples of the possible substituents of Ar₂ and Ar₃ include a halogen atom such as fluorine, chlorine and bromine, an alkyl group such as methyl, ethyl and propyl, an alkoxy group such as methoxy, ethoxy and propoxy, an aryloxy group such as phenoxy and naphthoxy, and an aralkyl group such as benzyl and phenethyl.

Preferable examples of the structural unit (1) are set out below, but the units (1) usable in the present invention are not limited to these examples. In the following tables the unit (1) is described by a set of R₁, R₂, R₃, X, Ar₁, Ar₂ and Ar₃.

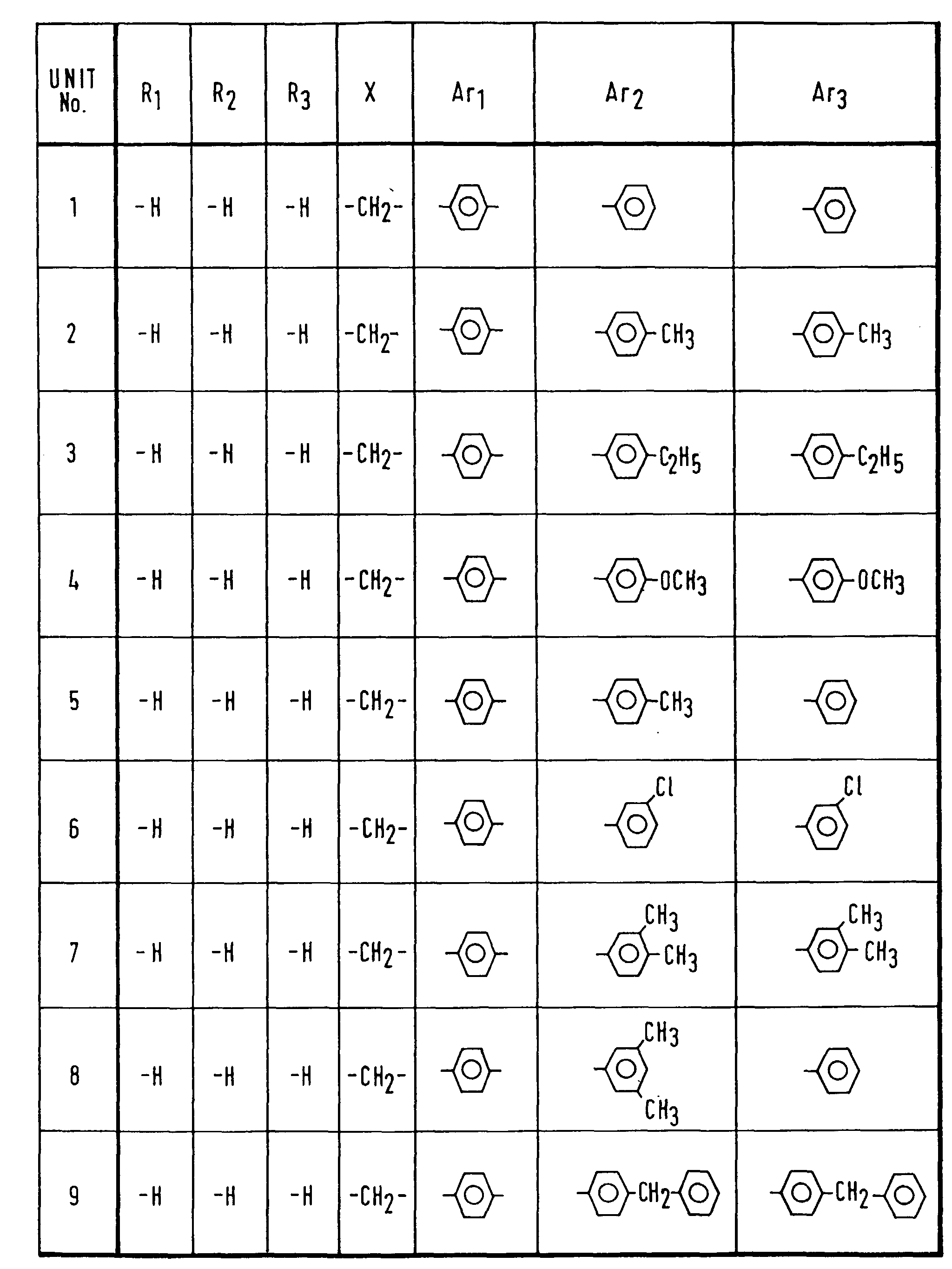

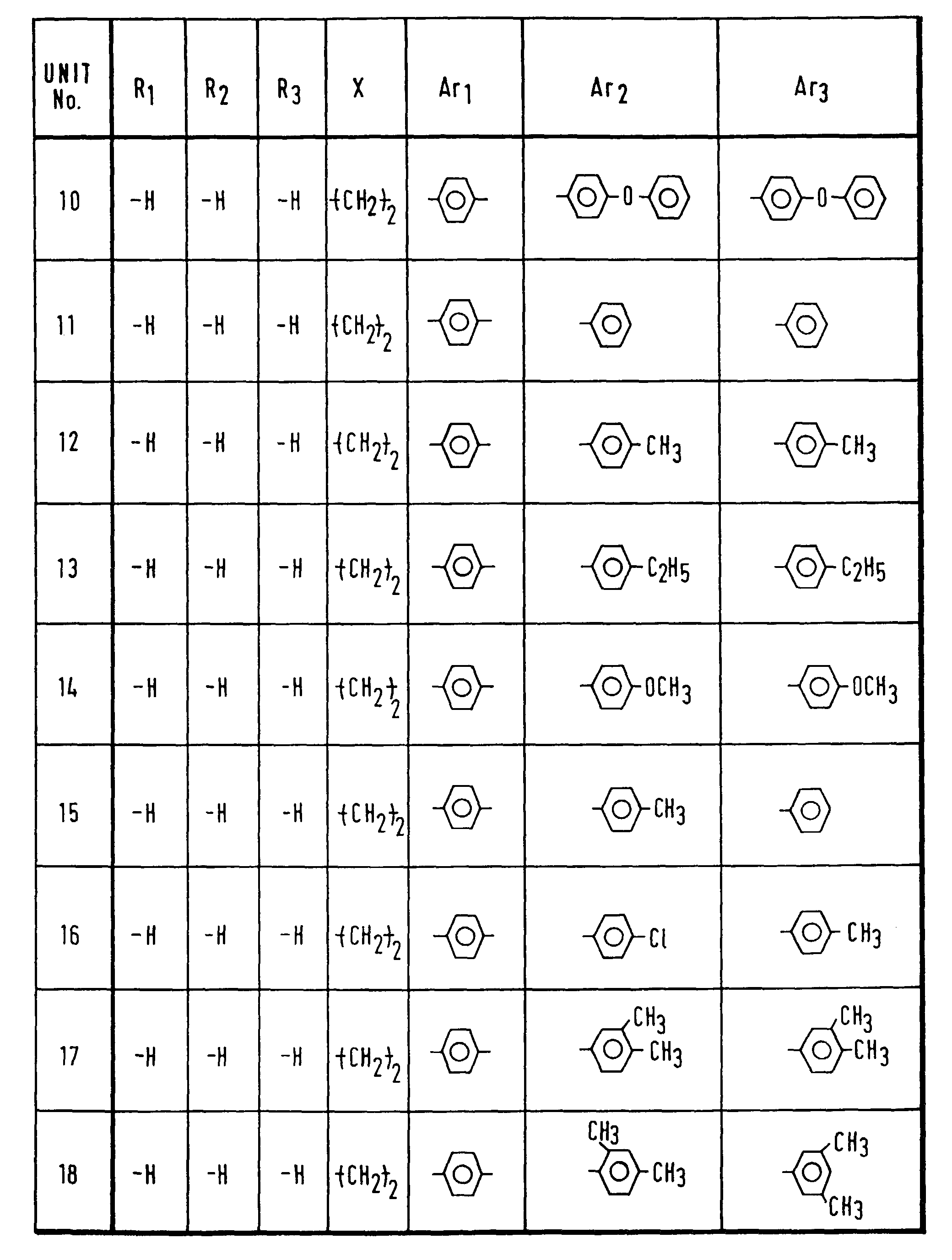

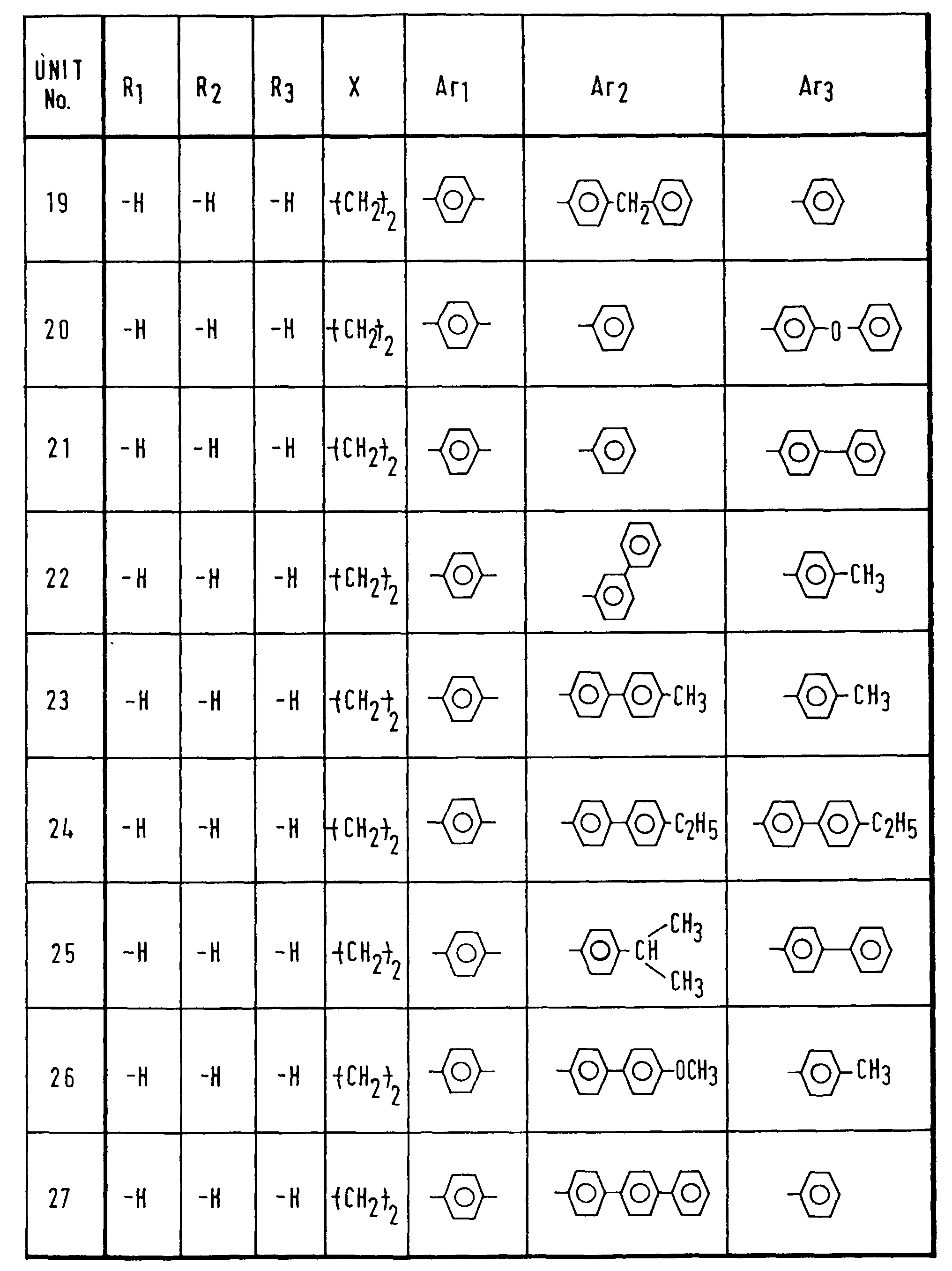

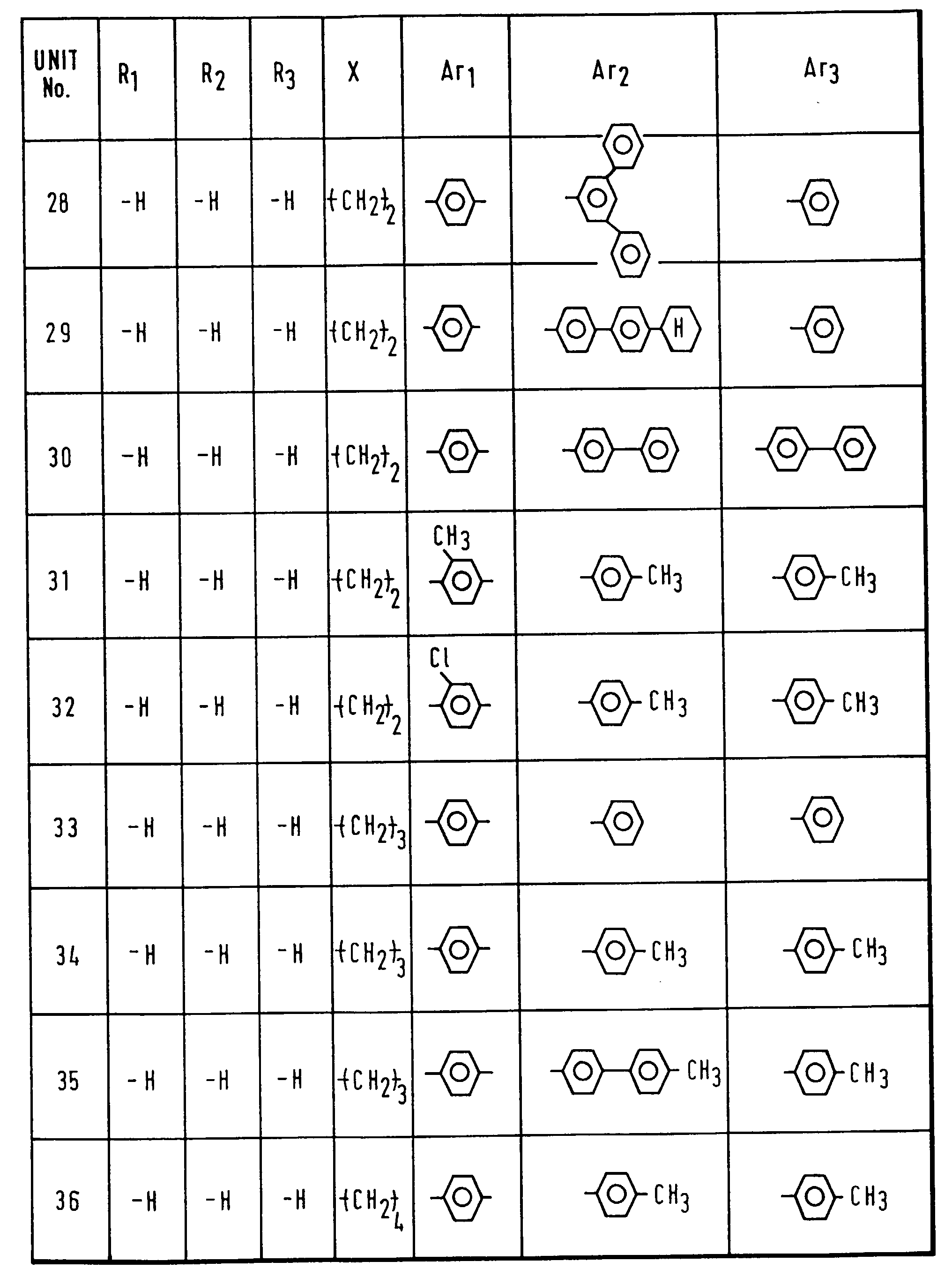

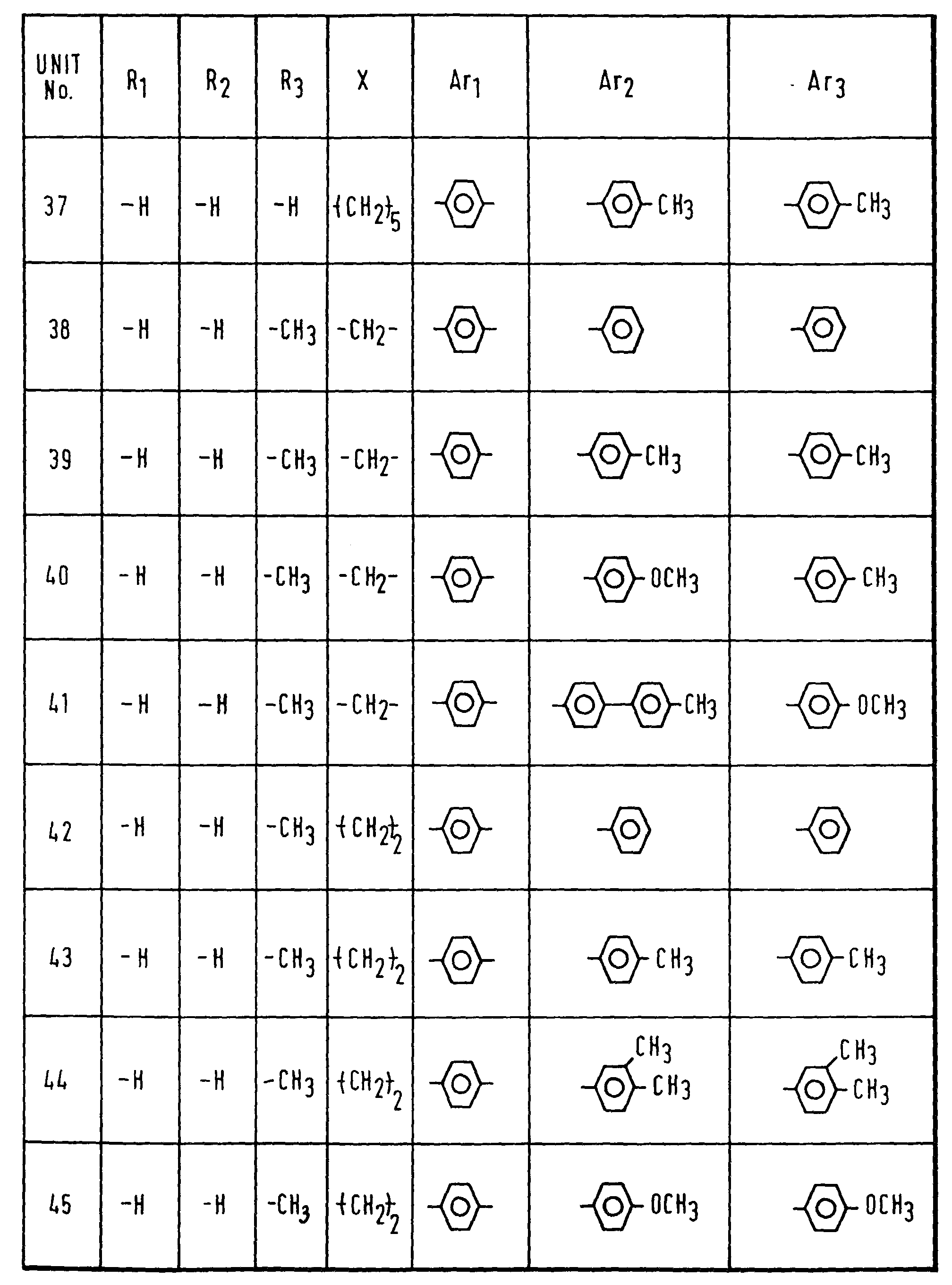

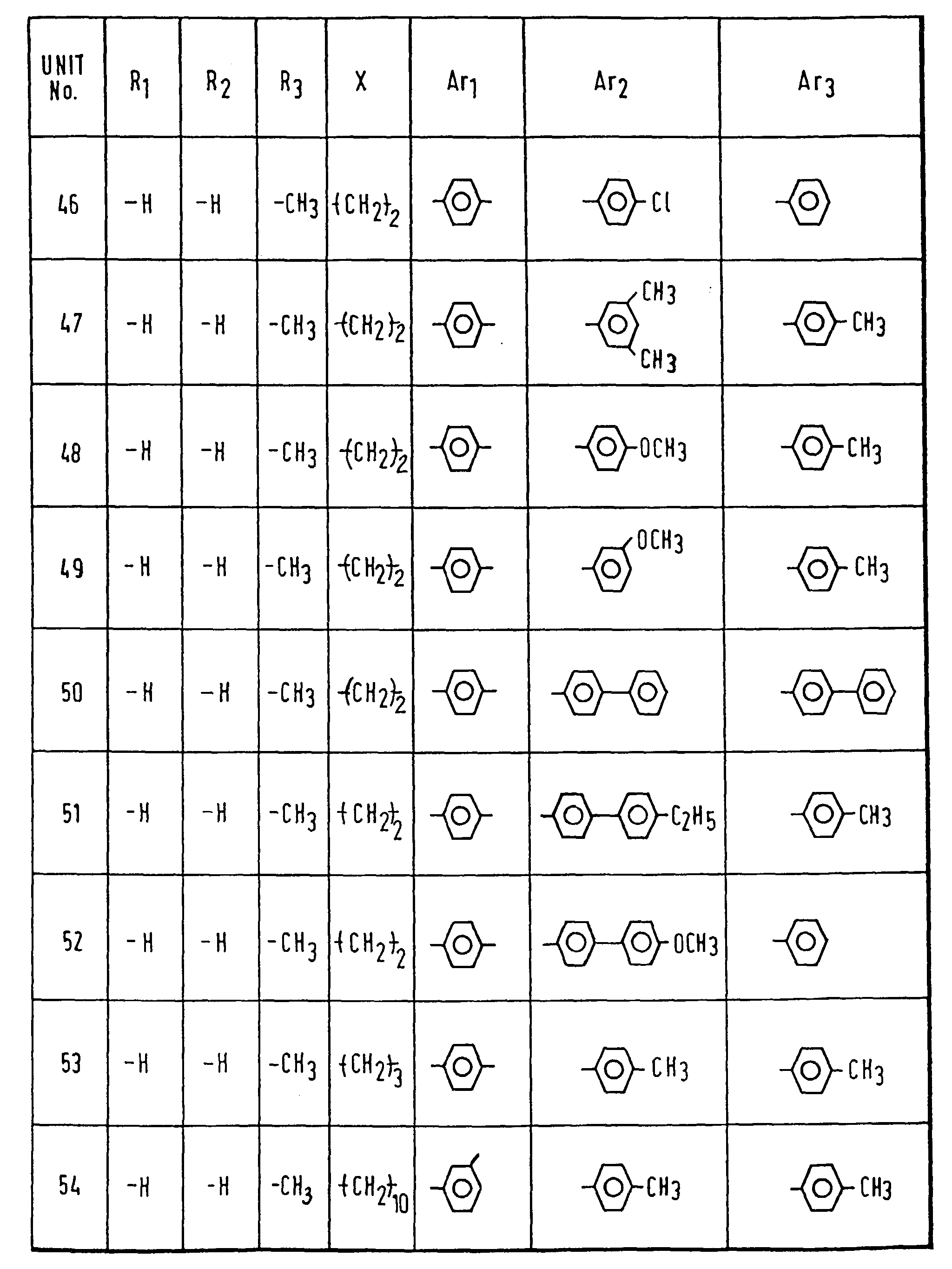

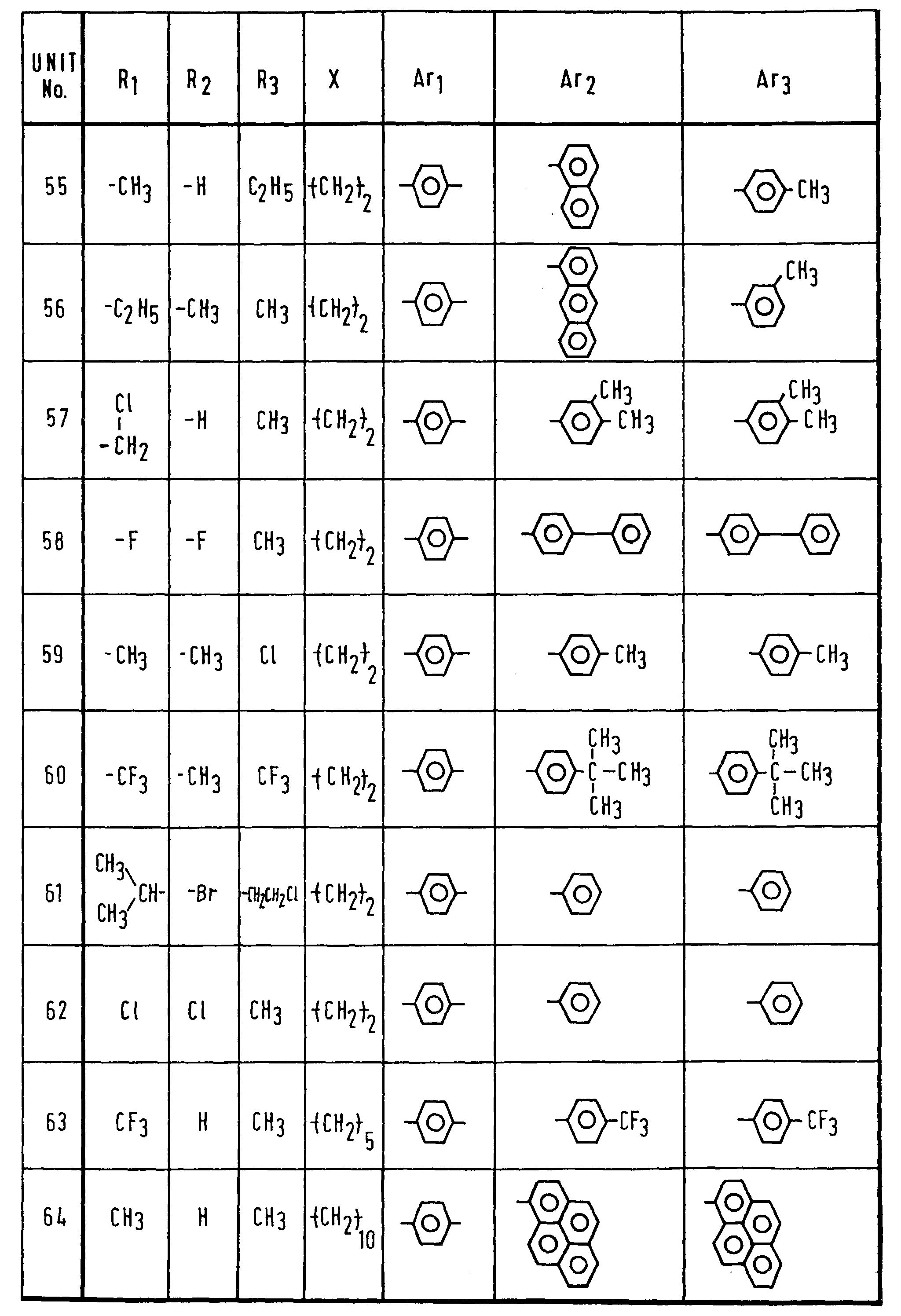

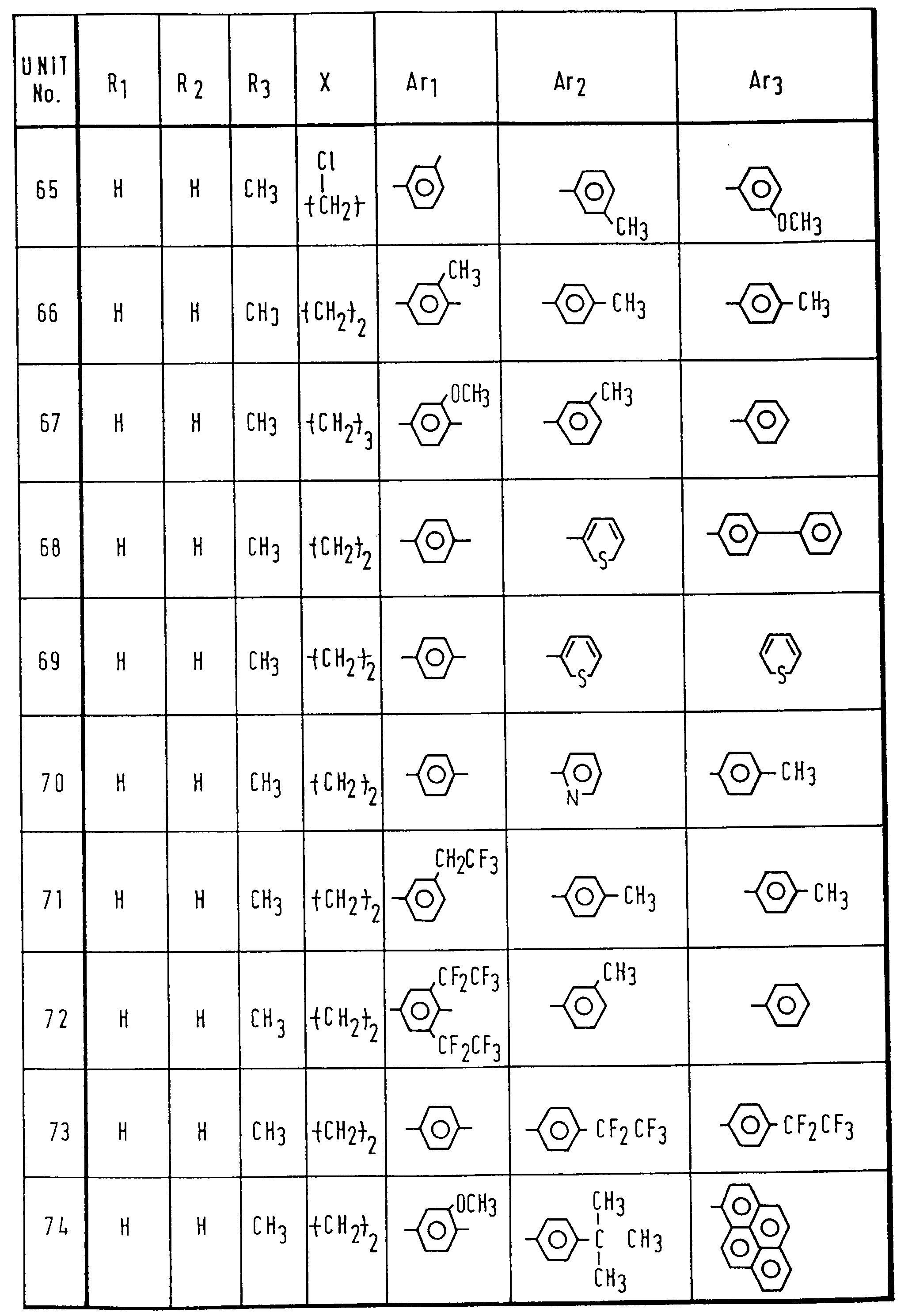

More preferable examples of the structural unit (1) include a unit having hydrogen atoms as R₁ and R₂, a hydrogen atom or methyl group as R₃, a normal chain alkylene group having no substituent as X, and phenyl groups as Ar₂ and Ar₃. The above alkylene group preferably has 1 to 10 carbon atoms.

The polymer of the present invention can be synthesized, for example, by polymerizing monomers represented by the following formula (2) 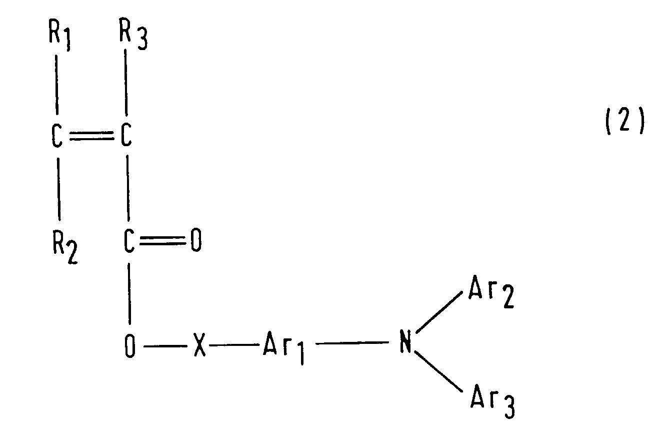 wherein R₁, R₂, R₃, X, Ar₁, Ar₂ and Ar₃ mean the same as in unit (1).

That is, firstly the above monomer (2) is dissolved in a solvent. Then a polymerization initiator is added into the solvent to form the polymer. Examples of the above solvent include toluene, benzene, chloroform, tetrachloromethane, tetrahydrofuran and dioxane. Examples of the above polymerization initiator include benzoyl peroxide and azobisisobutyronitrile. The above monomer is formed by condensation polymerization of acrylic acid chloride and triarylamine compound having hydroxyl groups.

The polymer of the present invention has excellent hole transfer characteristics, layer forming characteristics and high mechanical strength. The hole transfer characteristic (µd) is preferably 1 x 10⁻⁶ cm²/v.sec or above, more preferably 1 x 10⁻⁵ cm²/v.sec or above.

The hole transfer characteristics can be measured as follows. Firstly an oxytitaniumphthalocyanine layer having a thickness of 0.1 µm is formed by vacuum deposition on an aluminium substrate. Next a layer containing a polymer which has a thickness of 15 µm is formed on the oxytitaniumphthalocyanine layer to prepare a sample. The layer containing the polymer, for example, can be provided by applying a coating liquid which comprises the polymer and a solvent. Then an electric field of 3 x 10⁵ V/cm is applied to the sample to measure the hole transfer characteristics by xerographic time-of-flight method.

The weight average molecular weight of the polymer of the present invention is preferably 5000-1,000,000, more preferably 10,000-200,000. Herein, the weight average molecular weight is based on polystylene standard samples, and measured by GPC. If the molecular weight is less than 5000, it might be difficult to make a good layer. If the molecular weight is greater than 1,000,000, it might be difficult to dissolve the polymer in a solvent.

The polymer of the present invention may comprise more than two kinds of the structural unit (1) or a combination of the structural unit (1) and other acrylic type structural unit. The content of the structural unit (1) is preferably 10 mol% or above, more preferably 50 mol% or above based on the total structural units.

The polymer may be used in combination with other resin. Examples of the resin may include polymethl methacrylate, polystyrene, polyarylate, polycarbonate, polyvinyl butyral and polyesters. The content of the polymer of the present invention is preferably 10% or above, more preferably 30% or above based on the total weight of the polymer and the resin.

Hereinbelow, a photosensitive member according to the present invention will be explained. The photosensitive member comprises a conductive support and a photosensitive layer on the support. The photosensitive layer contains the polymer of the present invention. The photosensitive layer may comprise a charge transport layer containing the polymer of the present invention and a charge generation layer containing a charge generating substance.

The charge transport layer may contain the above resin, a low molecular weight charge-transporting substance and a high molecular weight charge-transporting substance besides the polymer of the invention.

Examples of the charge-transporting substance may include polycyclic aromatic compounds such as pyrene and anthracene; heterocyclic compounds such as carbazole type, indole type, imidazole type, oxazole type, thiazole type, oxadiozole type, pyrazole type, pyrazoline type, thiadiazole type and triazole type compounds; hydrazone compounds such as p-diethylaminobenzaldehyde-N,N-diphenyl hydrazone and N,N-diphenylhydrazino-3-methylidene-9-ethylcarbazole; styryl compounds such as α-phenyl-4-N,N-diphenyl aminostilbene and 5-[4-(di-p-tolyllamino)benzilidene]-5H-dibenzo[a,d]cycloheptene; benzidine compounds; triarylmethane compounds; triphenylamine compounds; and a polymer (for example, poly-N-vinylcarbazole and polyvinyl anthrathene) having in the main or side chain thereof, a group derived from the foregoing compounds. An inorganic substance such as selenium, selenium-tellurium, amorphous silicon and cadmium sulphide may be used as the charge-transporting substance. The charge-transporting substance may be used singly or in combination of more than one kind of charge-transporting substance. The thickness of the charge transport layer is preferably in a range of 5-40 µm, more preferably in a range of 10-30 µm.

The charge generation layer is made of the dispersed liquid containing the charge-generating substance and a binder resin. Examples of the binder resin may contain polyvinyl butyral, polystyrene, polyvinyl acetate, acrylic resin, cellulose acetate, ethyl cellulose and polymer of the present invention. Examples of the charge generating substance include azo pigments such as Sudan red and Dian blue; quinone pigment such as pyrene quinone and anth-anthrone; quinocyanin pigment; perylene pigment; indigo pigments such as indigo and thioindigo; azulenium salt pigments; or phthalocyanine pigments such as copper phthalocyanine and titanyl phthalocyanine. The thickness of the charge generation layer is preferably not greater than 5 µm, more preferably in a range of 0.05 to 2 µm.

The photosensitive layer may be constituted by a single layer containing the polymer of the present invention and the charge-generating substance. Furthermore, the single photosensitive layer can contain a resin or the charge-transporting substance. Examples of the charge-transporting substance for use in the single photosensitive layer include 2,4,7-trinitrofluorenone, 2,4,5,7-tetranitrofluorenone, chloranil and tetracyanoquinodimethane; and polymers of these charge-transporting substances, besides the aforementioned charge-transporting substance.

The thickness of the photosensitive layer is preferably 5-40 µm, more preferably 10-30 µm.

The conductive support used in the present invention may be made of aluminum, aluminum alloy, copper, zinc, stainless steel, vanadium, molybdenum, chromium, titanium, nickel, indium, gold or platinum. Any of the following may also be employed: a plastic (polyethylene, polypropylene, polyvinyl chloride, polyethylene terephthalate or an acrylic resin) substrate having a layer formed, by vacuum deposition, by using the foregoing metal or alloy; a support manufactured by disposing a layer containing an appropriate binder and conductive particles (for example, carbon black or silver particles) dispersed therein on a plastic, a metal or alloy substrate; or a support manufactured by impregnating plastic or paper member with conductive particles. The conductive support may have a drum, sheet or belt shape.

In the present invention, an undercoating layer having a barrier function and an adhesion function may be provided between the conductive substrate and the photosensitive layer. It is preferable that the thickness of the undercoating layer be 5 µm or less, more preferably 0.1 to 3 µm. The undercoating layer may be formed by using the following materials: casein, polyvinyl alcohol, nitrocellulose, polyamide (for example, nylon 6, nylon 66, nylon 610, copolymer nylon or alkoxy methylated nylon), polyurethane or aluminum oxide.

In order to protect the photosensitive layer from adverse external mechanical or chemical influences, a protective layer may be provided on the photosensitive layer. The protective layer may be a resin layer or a resin layer containing conductive particles or the charge transporting substance.

The electrophotographic photosensitive member according to the present invention can be used widely in electrophotographic fields, for example, in a laser beam printer, a CRT printer, an LED printer, a liquid crystal printer, a laser plate-making apparatus or a facsimile machine, as well as use in an electrophotographic copying machine.

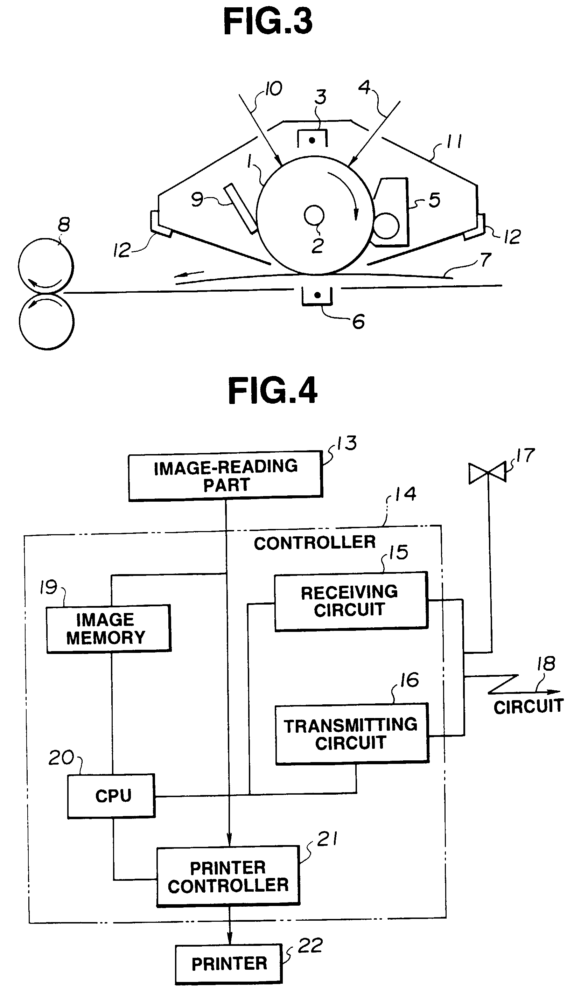

Figure 3 shows a schematic structural view of an embodiment of an electrophotographic apparatus using a process cartridge. The process cartridge has an electrophotographic photosensitive member of the present invention in it. Referring to Figure 3, a photosensitive drum (i.e. photosensitive member) 1 is rotated about an axis 2 at a prescribed peripheral speed in the direction of the arrow shown inside the photosensitive drum 1. The surface of the photosensitive drum is uniformly charged by means of a first charger 3 to have a prescribed positive or negative potential. The photosensitive drum 1 is subjected to image exposure with light 4 (e.g. slit exposure or laser beam-scanning exposure) using an image exposure means (not shown), so that an electrostatic latent image corresponding to an exposure image is successively formed on the peripheral surface of the photosensitive drum 1.

The electrostatic latent image is developed with toner by a developing means 5 to form a toner image. The toner image is successively transferred to a recording material 7 which is supplied from a supply station (not shown) to a position between the photosensitive drum 1 and a transfer means 6 in synchronism with the rotating speed of the photosensitive drum 1.

The recording material 7 with the toner image thereon is separated from the photosensitive drum 1 and is conveyed to a fixing station 8, followed by image fixing to print out the recording material 7 as a copy outside the electrophotographic apparatus.

Residual toner particles on the surface of the photosensitive drum 1 after the transfer are removed by means of a cleaner 9 to provide a cleaned surface, and residual charge on the surface of the photosensitive drum 1 is erased by a pre-exposure means (not shown) to prepare for the next cycle. If a contact charger which touches the photosensitive drum 1 is used instead of a corona charger, the pre-exposure means is not always needed. According to the present invention, in the electrophotographic apparatus, it is possible to provide a process cartridge which includes plural means inclusive of or selected from the photosensitive member 1 (photosensitive drum), the first charger 3, the developing means 5, the cleaner 9, etc so as to be attached or removed as desired. The process cartridge may, for example, be composed of the photosensitive member and at least one of the first charger 3, developing means 5 and the cleaner 9, and be capable of being attached to or removed from the body of the electrophotographic apparatus by using a guiding means such as a rail in the body.

In case where the electrophotographic apparatus is used as a copying machine or printer, image-wise exposure with light-image 4 may be effected by using reflected light or transmitted light from an original or by reading data on the original by a sensor, converting the data into a signal and then effecting laser beam scanning, driving of an LED array or driving of a liquid crystal shutter array in accordance with the signal.

In the case where the electrophotographic apparatus is used as a printer for a facsimile machine, the image-wise exposure with light 4 may be performed to print the received data. Figure 4 shows an example of this case in the form of a block diagram.

A controller 14 controls a image-reading part 13 and a printer 22. The controller 11 is controlled in its entirety by a CPU 17. The read data from the image-reading part 13 is transmitted to a partner station via transmitting circuit 16. The data received from the partner station is sent to the printer 22 via a receiving circuit 15. An image memory 19 stores predetermined image data therein. A printer controller 21 controls the printer 22. Denoted at 17 is a telephone set.

The image information received from a line 18 (i.e. the image information received from a remote terminal connected via the line) is demodulated by the receiving circuit 15, decoded by the CPU 20, and then stored in the image memory 19 successively. When the image information of at least one page is stored in the image memory 19, image recording of that page takes place. The CPU 20 reads the image information of one page out of the image memory 19 and sends the decoded image information of one page to the printer controller 21. Upon receiving the image information of one page from the CPU 20, the printer controller 21 controls the printer 22 to perform the image information recording of that page. Note that during the recording by the printer 22, the CPU 20 is receiving the image information of the next page. The receiving and recording of images are carried out in this manner.

An electroluminescence device of the present invention comprises at least a luminescence layer and electrodes. The luminescence layer sends out light by the recombination of a hole and an electron.

A hole transfer layer, an electron transfer layer or both of them may be preferably provided in addition to the luminescence layer, so that a hole and an electron recombine efficiently.

When both of the hole transfer layer and the electron transfer layer are provided, the luminescence layer is located between the hole transfer layer and the electron transfer layer.

The luminescence layer can accept holes which come from an anode or the hole transfer layer, or can accept electrons which come from a cathode or the electron transfer layer when a voltage is applied to the electroluminescence device. Furthermore, holes and electrons can pass through the luminescence layer to which the voltage is applied. Examples of a material for use in the luminescence layer along with the polymer of the present invention include stilbene, oxadiazole, aromatic condensation ketone, imidazole and metal complexes such as aluminum-quinolinol complex, zinc-thiazole complex and beryllium-quinolinol complex.

From the standpoint of the hole transfer efficiency, an example of a material for use in the hole transfer layer preferably includes the polymer of the present invention. From the standpoint of electron transfer efficiency, examples of a material for use in electron transfer layer preferably include triazole and quinone.

The forming method of the aforementioned layers may include coating such as dip coating, spin coating and blade coating, and vapour deposition, but not in a limiting sense. From the standpoint of productivity, the coating method is preferable.

A metal which has a relatively high work function or an electrically conductive compound may be used as the anode electrode. Examples of the anode electrode may include transparent material such as ITO, SnO₂ and ZnO; or a metal such as gold or aluminium.

A metal which has a relatively low work function or an electrically conductive compound may be used as the cathode electrode. Examples of the cathode electrode may include metals such as aluminium, magnesium, calcium, lithium, copper and silver; materials containing these metals. At least one of a pair of electrodes is preferably transparent or semi-transparent. The electrodes can be formed by the conventional methods such as vacuum deposition and sputtering. The electroluminescence device of the present invention is preferably formed on a substrate. The substrate may include glass and transparent plastic.

Hereinbelow, the present invention will be explained in more specifically with reference to examples.

### Example 1

Firstly, 5ml of pyridine were added into 100ml of tetrahydrofuran dissolving 10.0g of N, N-di-p-toluyl-4-aminophenethyl alcohol to prepare a solution. Then, 5.0g of acrylic acid chloride was added into the solution at 10°C, followed by stirring for three hours at room temperature. The solution was added into 200ml of water after which it was extracted twice using 100ml of ethyl acetate as the extraction solvent. After that, the liquid obtained through the extraction was washed with 100ml of water three times, followed by concentrating and developing by a mixture of ethyl acetate and hexane, by using silica gel column chromatography. As a result, 9.5g of N,N-di-p-toluyl-aminophenethyl acrylate was obtained as a colourless and viscous solution. The yield percentage of N,N-di-p-toluyl-aminophenethyl acrylate was 80.6%.

5.0g of N,N-di-p-toluyl-4-aminophenethyl acrylate was added to 15ml of toluene to prepare a solution. 50mg of azobisisobutyronitorile was added to the solution at 70°C under a nitrogen flow. The solution was maintained at 70°C for three hours in order to react, then at 80°C for two hours. After that, the solution was dropped into 300ml of methanol to form a deposit of polymer. The deposit was filtered followed by drying. Next the dried deposit was refined. That is, the dried deposit was added into 30ml of tetrahydrofuran to prepare a solution. Then, the solution was dropped into 300ml of methanol, followed by filtering and drying. The process of refining the deposit was repeated three times to prepare 4.2g of the refined polymer. The yield percentage of the polymer was 84%. The weight average molecular weight of the polymer was 5.0 x 10⁴.

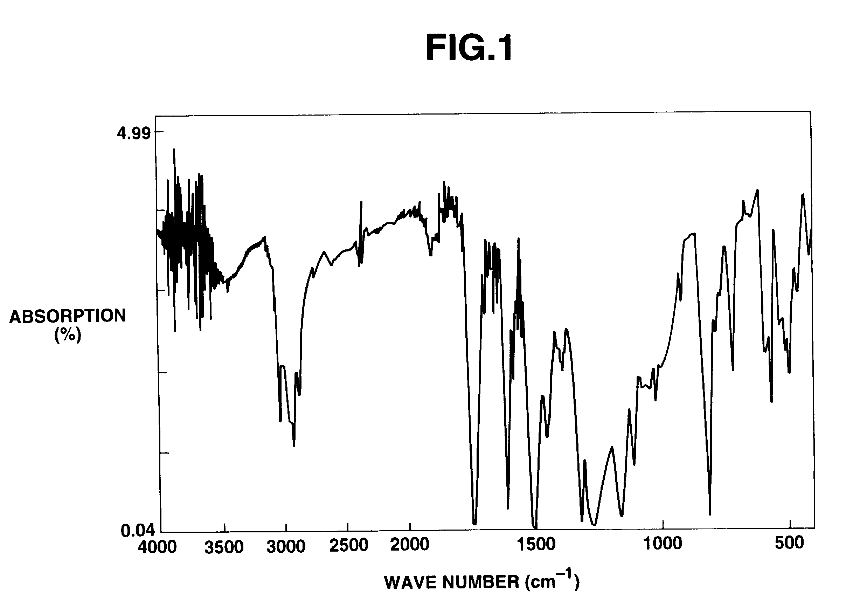

The infrared absorption spectrum of the polymer was measured by means of PERKIN ELMER 1600 series FTIR. The result is shown in figure 1. The polymer had the structural units No 12 shown in aforementioned table according to figure 1.

Next, a layer of the polymer was formed in order to measure the hole transfer characteristics, and it was evaluated visually. The hole transfer characteristics of the polymer were found to be 3.0 x 10⁻⁴ cm²/V.sec. No cracks were apparent in the layer.

### Example 2

3.8g of the polymer of the present invention were obtained in the same manner as in Example 1 except that the mixture of N,N-di-p-toluyl-4-aminophenethyl acrylate and toluene used in Example 1 was changed to a mixture of 4.0g of N,N-di-p-toluyl-4-aminophenethyl acrylate, 1.0g of methyl methacrylate and 20ml of toluene. The yield percentage of the polymer was 76.0%. The weight average molecular weight of the polymer was 3.2 x 10⁴.

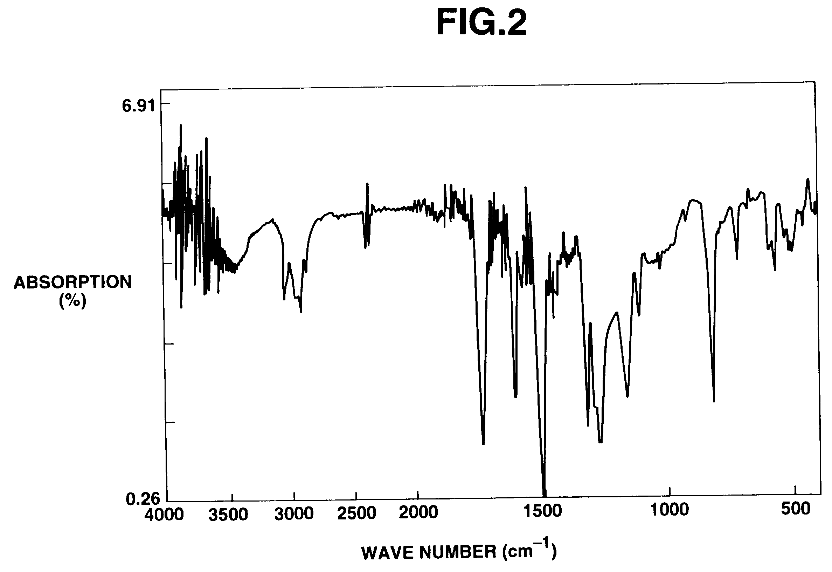

The infrared absorption spectrum of the polymer was measured in the same manner as in Example 1. The result is shown in figure 2. The polymer had the structural units No 12 shown in the aforementioned table and acrylic structural units. The hole transfer characteristics and cracks was evaluated in the same manner as in Example 1. As a result, the hole transfer characteristic was 1.0 x 10⁻⁴cm/V.sec, and no cracks were recognized.

### Example 3

4.4g of the polymer of the present invention were obtained in the same manner as in Example 1 except that N,N-di-p-toluyl-4-aminophenethyl acrylate alcohol used in Example 1 was changed to N,N-di-3,4-xylyl-4-aminobenzyl alcohol. The polymer had the structural units No 7 shown in the aforementioned table. The weight average molecular weight and the hole transfer characteristics of the polymer were 6.4 x 10⁵ and 2.1 x 10⁻⁴ cm/V.sec respectively. No cracks were recognized.

### Example 4

4.5g of the polymer of the present invention were obtained in the same manner as in Example 1 except that N,N-di-p-toluyl-4-aminophenethyl alcohol used in Example 1 was changed to N,N-di-3,4-toluyl-4-aminophenylheptyl alcohol. The polymer had the structural units No 37 shown in the aforementioned table. The weight average molecular weight and the hole transfer characteristics of the polymer were 4.5 x 10⁴ and 1.1 x 10⁻⁴ cm²/V.sec respectively. No cracks were recognized.

### Comparative Example 1

The hole transfer characteristics of a polymer having the following structural unit was measured.

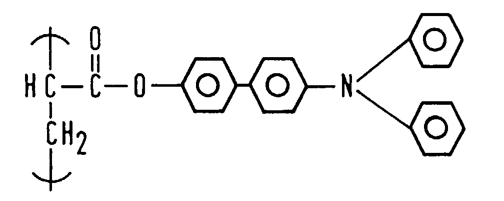

The result was 5.0 x 10⁻⁶ cm²/V.sec. Many cracks were recognized on the layer of the polymer.

### Comparative Example 2

The hole transfer characteristics of a polymer having the following structural unit was measured. 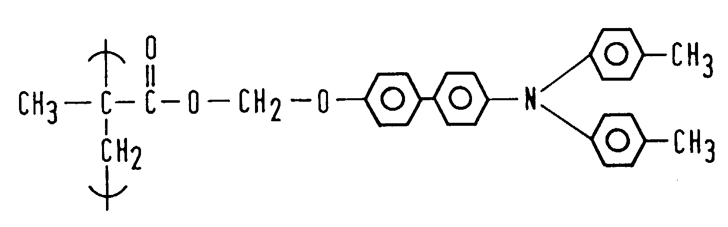 The result was 3.0 x 10⁻⁶ cm²/V.sec. Many cracks were recognized on the layer of the polymer.

### Comparative Example 3

The hole transfer characteristics of the following hole transfer layer were measured. The hole transfer layer was made of a coating liquid containing 5.0g of triaryl amine represented by the following formula, 5.0g of polymethyl methacrylate and 40.0g of toluene.

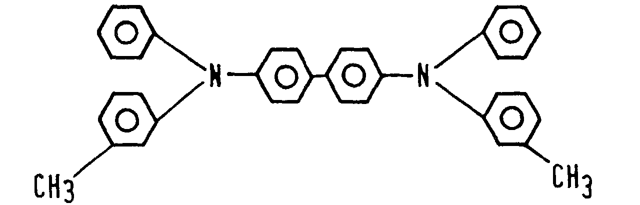

The hole transfer characteristic was 5.0 x 10⁻⁷ cm²/V. sec. No cracks were recognized. However, many crystals were recognized in the layer.

### Example 5

A photosensitive member of the present invention was prepared in the following manner. 5g of methoxymethylated nylon and 10g of copolymeric nylon were dissolved in 95g of methanol to prepare a coating liquid. The coating liquid was applied onto an aluminium support by means of a wire bar, followed by drying to form a under-coat layer having a thickness of 1µm. The number average molecular weight of the methoxymethylated nylon was 32000, and that of the copolymeric nylon was 29000.

Next, a mixture of 5g of azo pigments represented by the following formula, 95g of cyclohexanone and 2g of polyvinyl butyral (butyralation degree: 63% or above, number average degree of polymerization:2000) was dispersed for 20 hours by a sand mill to prepare a coating liquid.

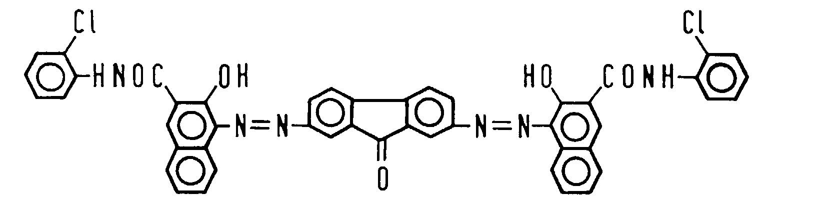

The coating liquid was applied onto the under-coat layer by means of a wire bar, followed by drying to form a charge generation layer having a thickness of 0.2 µm. After that, a mixture of 3g of the polymer prepared in Example 1 and 8g of monochlorobenzene were applied onto the charge generation layer by means of a wire bar, followed by drying to form a charge transport layer having a thickness of 19 µm.

The charge properties of the resultant photosensitive member was measured by means of a electrostatic copying paper testing apparatus (trade name: SP-428, manufactured by KAWAGUCHI DENKI Inc.) in the following manner.

Firstly, the surface electric potential Vo of the photosensitive member was measured, just after the photosensitive member was charged by corona discharge of -5kV. After that, the photosensitive member was left for 1 second in a dark place. Then the surface electric potential V₁ was measured. Finally, the sensitivity E_{1/5} was measured. The sensitivity E_{1/5} is the quantity of the halogen light which makes V₁ smaller until it becomes 1/5V₁, when the halogen light of 10 lux exposes the photosensitive member. The results are shown in Table 1.

Furthermore, the durability of the resultant photosensitive member was evaluated in the following manner. The resultant photosensitive member was fixed to a photosensitive member of the electrophotographic copying machine (trade name: NP-3825, manufactured by Canon Inc.). Then an unexposed part potential V_{D} and an exposed part potential V_{L} of the resultant photosensitive member were measured. Next V_{D} and V_{L} were measured again after the photosensitive member was used 5000 times continuously. The initial V_{D} and V_{L} were set for -700V and -200V respectively. The changes of V_{D} and V_{L} show the durability of the photosensitive member. The results are shown in Table 1.

**TABLE 1**

| EXAMPLE | V₀ (-V) | V₁ (-V) | E_{1/5} (lux.sec) | INITIAL (-V) | | AFTER 5000 COPIES (-V) |
|---|---|---|---|---|---|---|
| 5 | 1100 | 1080 | 1.10 | V_{D} | 700 | 680 |
| | | | | V_{L} | 200 | 210 |

### Examples 6-11

Photosensitive members were prepared in the same manner as in Example 5 except that the polymer used in the charge transport layer of Example 5 was changed to the following polymers (A)-(F).
(A) a polymer prepared in Example 3 (Example 6)
(B) a polymer prepared in Example 2 (Example 7)
(C) a polymer having structural units No 17 shown in the aforementioned table (Example 8)
(D) a polymer having structural units No 24 shown in the aforementioned table (Example 9)
(E) a polymer prepared in Example 4 (Example 10)
(F) a polymer having structural units No 59 shown in the aforementioned table (Example 11).

Each photosensitive member was evaluated in the same manner as in Example 5. The results are shown in Table 2.

**TABLE 2**

| EXAMPLE | V₀ (-V) | V₁ (-V) | E_{1/5} (lux.sec) | INITIAL | | AFTER 5000 COPIES | |
|---|---|---|---|---|---|---|---|
| | | | | V_{D}(-V) | V_{L}(-V) | V_{D}(-V) | V_{L}(-V) |
| 6 | 950 | 930 | 0.82 | 700 | 200 | 680 | 210 |
| 7 | 1110 | 1100 | 0.99 | 700 | 200 | 710 | 230 |
| 8 | 1050 | 1030 | 1.05 | 700 | 200 | 700 | 220 |
| 9 | 970 | 950 | 0.95 | 700 | 200 | 670 | 195 |
| 10 | 1140 | 1135 | 0.87 | 700 | 200 | 680 | 200 |
| 11 | 1150 | 1125 | 0.93 | 700 | 200 | 710 | 215 |

### Comparative Examples 4 and 5

Photosensitive members were prepared in the same manner as in Example 5 except that the polymer used in the charge transport layer of Example 5 was changed to the following polymers (G)-(H).
The results are shown in Table 3.
(G) a polymer prepared in Comparative Example 1 (Comparative Example 4)
(H) a polymer prepared in Comparative Example 2 (Comparative Example 5)

### Comparative Example 6

A photosensitive member was prepared in the same manner as in Example 5 except that the charge transport layer was made of a coating liquid containing 3.0g of triaryl amine used in Comparative Example 3, 3.0g of polymethyl methacrylate and 20.0g of monochlorobenzene. The results are shown in Table 3.

**TABLE 3**

| COMP EXAMPLE | V₀ (-V) | V₁ (-V) | E_{1/5} (lux.sec) | INITIAL | | AFTER 5000 COPIES | |
|---|---|---|---|---|---|---|---|
| | | | | V_{D}(-V) | V_{L}(-V) | V_{D}(-V) | V_{L}(-V) |
| 4 | 500 | 410 | 2.40 | 500 | 200 | 375 | 280 |
| 5 | 630 | 500 | 3.10 | 650 | 200 | 510 | 400 |
| 6 | 950 | 850 | 2.10 | 700 | 200 | 500 | 250 |

### Example 12

An electroluminescence device of the present invention was prepared in the following manner. The glass substrate having a ITO layer was cleaned in acetone by using ultrasonic waves, followed by dipping in boiling ethanol, dipping in boiling toluene and drying. The thickness of the ITO layer was 0.1 µm. Then 0.1g of the polymer having structural units No 39 shown in the aforementioned table was added into 10g of chloroform to prepare a coating liquid. The coating liquid was applied onto the glass substrate by spin coating, followed by drying to form a hole transfer layer having a thickness of 0.05 µm. A first layer of oxine aluminium complex was formed on the hole transfer layer by vacuum deposition. The thickness of the first layer was 0.03 µm. Finally, a second layer of a mixture of magnesium and silver was formed on the first layer by vacuum deposition. The thickness of the second layer was 0.1 µm. The ratio of magnesium to silver was 10 to 1. The resultant electroluminescence device emitted green light when a direct voltage of 15V was applied to it. The luminance of the green light was 2500cd/m². The luminance did not decline for at least 150 hours on condition that the electroluminescence device sent out light having a luminance of 100cd/m² initially.

### Example 13

A electroluminescence device was prepared in the same manner as in Example 12 except that the structural unit No 39 used in Example 12 was changed to a structural unit No 44. The resultant electroluminescence device emitted green light when a directed voltage of 15V was applied to it. The luminance of the green light was 2300cd/m². The luminance did not decline for at least 150 hours on condition that the electroluminescence device sent out light having a luminance of 100cd/m² initially.

## Claims

1. A polymer characterised by comprising the following structural unit (1) 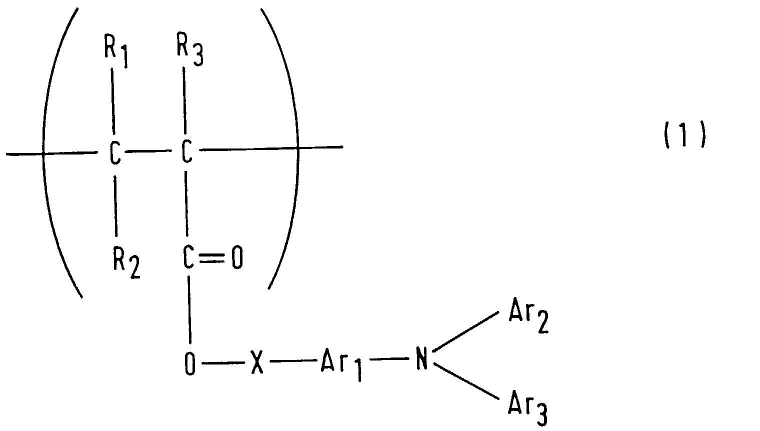 wherein:
each of R₁, R₂, and R₃ is a hydrogen atom, an alkyl group or a halogen atom and R₁, R₂, and R₃ may be the same or different;
X is an alkylene group;
Ar₁ is a phenylene group;
each of Ar₂ and Ar₃ is an aromatic hydrocarbon ring group or an aromatic heterocyclic group, Ar₂ and Ar₃ may be the same or different; and
each of R₁, R₂, R₃, X, Ar₁, Ar₂ and Ar₃ may have substituents.

2. A polymer according to claim 1, wherein the structural unit has hydrogen atoms as R₁ and R₂, a hydrogen atom or methyl group as R₃, a normal chain alkylene group having 1 to 10 carbon atoms and no substituent as X, and phenyl groups as Ar₂ and Ar₃.

3. A polymer according to any preceding claim, wherein the hole transfer characteristic is 1 x 10⁻⁶ cm²/v.sec or above.

4. A polymer according to claim 3, wherein the hole transfer characteristic is 1 x 10⁻⁵ cm²/v.sec or above.

5. An electrophotographic photosensitive member comprising a conductive support and a photosensitive layer, characterised in that the photosensitive layer contains a polymer containing the following structural unit (1) 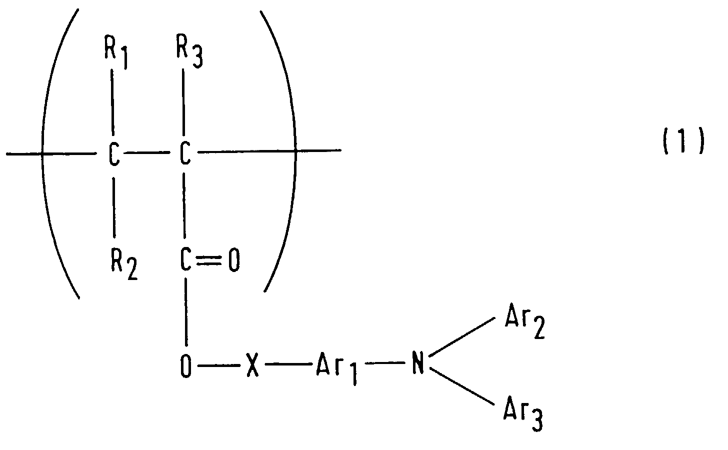 wherein:
each of R₁, R₂, and R₃ is a hydrogen atom, an alkyl group or a halogen atom, and R₁, R₂, and R₃ may be the same or different;
X is an alkylene group;
Ar₁ is a phenylene group;
each of Ar₂ and Ar₃ is an aromatic hydrocarbon ring group or an aromatic heterocyclic group and Ar₂ and Ar₃ may be the same or different; and
each of R₁, R₂, R₃, X, Ar₁, Ar₂ and Ar₃ may have substituents.

6. The member according to claim 5, wherein the structural unit has hydrogen atoms as R₁ and R₂, a hydrogen atom or methyl group as R₃, a normal chain alkylene group having 1 to 10 carbon atoms and no substituent as X, and phenyl groups as Ar₂ and Ar₃.

7. The member according to claim 5 or 6, wherein the photosensitive layer comprises a charge generation layer and a charge transport layer which contains the polymer.

8. A process cartridge which comprises the member of claim 5, 6 or 7, and at least one selected from the group consisting of a charger, a developing means and a cleaner.

9. An electrophotographic apparatus which comprises the member of claim 5, 6 or 7, a charger, an exposure device, a developing means and a transfer means.

10. An electroluminescence device comprising electrodes and a luminescence layer, characterised in that the luminescence layer contains a polymer containing the following structural unit (1) 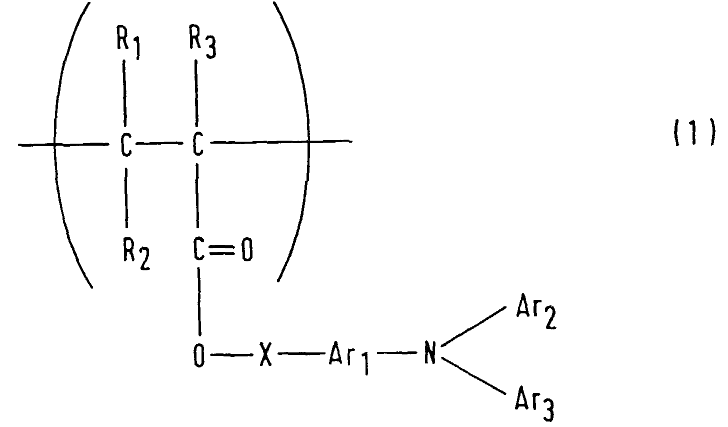 wherein:
each of R₁, R₂, and R₃ is a hydrogen atom, an alkyl group or a halogen atom and R₁, R₂, and R₃ may be the same or different;
X is an alkylene group;
Ar₁ is a phenylene group;
each of Ar₂ and Ar₃ is an aromatic hydrocarbon ring group or an aromatic heterocyclic group, Ar₂ and Ar₃ may be the same or different; and
each of R₁, R₂, R₃, X, Ar₁, Ar₂ and Ar₃ may have substituents.

11. An electroluminescence device comprising electrodes, a luminescence layer and a hole transfer layer, characterised in that the hole transfer layer contains a polymer containing the following structural unit (1) 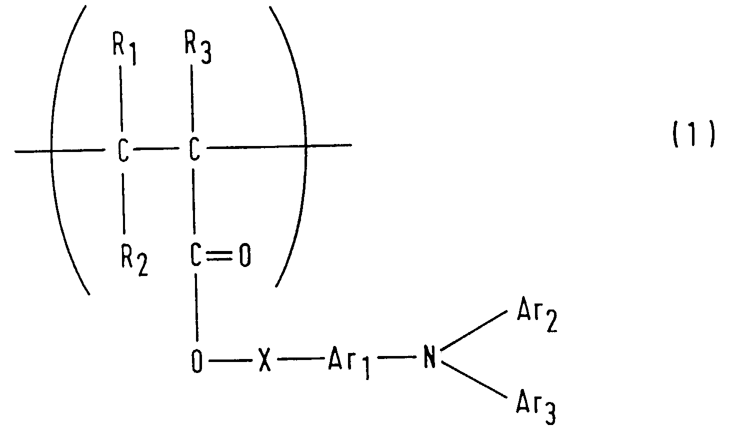 wherein:
each of R₁, R₂, and R₃ is a hydrogen atom, an alkyl group or a halogen atom and R₁, R₂, and R₃ may be the same or different;
X is an alkylene group;
Ar₁ is a phenylene group;
each of Ar₂ and Ar₃ is an aromatic hydrocarbon ring group or an aromatic heterocyclic group, Ar₂ and Ar₃ may be the same or different; and
each of R₁, R₂, R₃, X, Ar₁, Ar₂ and Ar₃ may have substituents.

12. The device according to claim 10 or 11, wherein the structural unit has hydrogen atoms as R₁ and R₂, a hydrogen atom or methyl group as R₃, a normal chain alkylene group having 1 to 10 carbon atoms and no substituent as X, and phenyl groups as Ar₂ and Ar₃.
